# EUROPÄISCHE PATENTSCHRIFT

(11) **EP 0 623 642 B1**
(45) Veröffentlichungstag und Bekanntmachung des Hinweises auf die Patenterteilung: **28.05.1997**
(21) Anmeldenummer: 94106129.3
(22) Anmeldetag: 20.04.1994
(51) Int. Cl.: C08G 77/38, C08L 83/04, C08K 5/54, C08K 3/16, C08K 3/30, C08K 5/42, C08G 77/32, C08K 3/24

(54) **Stabilisierung von Acetatsystemen**
Stabilizing of acetate systems
Stabilisation des systèmes d'acétate

(30) Priorität: 03.05.1993 DE 4314502
(43) Veröffentlichungstag der Anmeldung: 09.11.1994
(73) Patentinhaber: BAYER AG, 51368 Leverkusen (DE)
(72) Erfinder: Weber, Wilhelm, Dr., D-51373 Leverkusen (DE); Sockel, Karl-Heinz, D-51373 Leverkusen (DE); Moretto, Hans-Heinrich Dr., D-51375 Leverkusen (DE)

(56) Entgegenhaltungen:
- EP-A- 0 129 318
- EP-A- 0 468 239

## Beschreibung

Die Erfindung betrifft ein Verfahren zur Verbesserung der Lagerstabilität von einkomponentigen Siliconpasten, die bei Zutritt von Luftfeuchtigkeit unter Abspaltung von Essigsäure aushärten.

Einkomponentige feuchtigkeitshärtende Siliconpasten, die unter Abspaltung von Essigsäure aushärten, sind seit vielen Jahren bekannt. Sie werden als Dicht- und Klebstoffe, vor allem im Hochbau, eingesetzt. Derartige Massen werden üblicherweise aus OH-funktionellen Polydimethylsiloxanen, einem Alkyltriacetoxysilan und pyrogener Kieselsäure hergestellt. In der Regel werden zusätzlich nichtfunktionelle Polydimethylsiloxane als Weichmacher und Dialkylzinndicarboxylate als Katalysatoren eingesetzt. Außerdem kann die Haftung der Vulkanisate auf bestimmten Substraten durch die Zugabe von weiteren Silanen, die als Haftmittel wirken, verbessert werden.

Die beschriebenen Massen können unter Ausschluß von Feuchtigkeit mindestens 12 Monate gelagert werden, ohne daß die Funktionsfähigkeit bei der Applikation beeinträchtigt wird. Ob eine längere Lagerzeit ohne Schädigung überstanden wird, hängt jedoch von der Zusammensetzung der Formulierung und der Art der verwendeten Rohstoffe ab. Insbesondere solche Formulierungen, die nichtfunktionelle Polysiloxanweichmacher enthalten, können nach längerer Lagerzeit Schwächen bei der Vulkanisation zeigen. Häufig härten sie 24 Monate nach der Herstellung kaum noch aus und werden auf diese Weise unbrauchbar.

Die Polysiloxane, die bei der Herstellung der unter Abspaltung von Essigsäure härtenden Siliconmassen Verwendung finden, werden meist aus Cyclodimethylsiloxanen oder kurzkettigen OH-terminierten Polydimethylsiloxangemischen hergestellt. Bei dem am weitesten verbreiteten anionischen Polymerisationsprozeß verwendet man beispielsweise KOH oder Kaliumsilanolat als Katalysator. Nach der Einstellung des Ring/Ketten Gleichgewichts in Gegenwart der End-gruppen bildenden Agentien muß die Reaktionsmischung neutralisiert werden, um Gleichgewichtsverschiebungen während der Aufarbeitung des Reaktionsgemisches zu vermeiden. Zur Neutralisation des Reaktionsgemischs wird bevorzugt Phosphorsäure bzw. ein phosphorsäurehaltiges Polysiloxan bzw. Silylphosphat eingesetzt. Die vorliegende Erfindung bezieht sich auf Siliconpasten, die mit anionischer Katalyse hergestellte Polysiloxane enthalten.

Überraschenderweise wurde gefunden, daß die Lagerfähigkeit von unter Abspaltung von Essigsäure härtenden Siliconmassen durch den Zusatz bestimmter Mengen an starken Säuren oder solchen Verbindungen, die in der Paste durch Umsetzung mit der freien Essigsäure starke Säuren bilden, verbessert werden kann.

Als starke Säuren können Verbindungen mit dem funktionellen Rest -SO₃H oder Chlorwasserstoff eingesetzt werden. Zu den Verbindungen mit dem -SO₃H Rest zählen Schwefelsäure, Metallhydrogensulfate und Alkyl- oder Arylsulfonsäuren. Möglich ist auch die Zugabe von Verbindungen, die in Gegenwart von Essigsäure die genannten starken Säuren freisetzen, beipielsweise Silylsulfate oder Silylsulfonate oder Chlorsilane. Eine weitere Möglichkeit besteht in der Zugabe von Füllstoffen, deren Oberfläche mit Schwefelsäure, Metallhydrogensulfaten, Sulfonsäuren oder Chlorwasserstoff belegt ist. Bevorzugt ist die Verwendung von Schwefelsäure oder Metallhydrogensulfaten. Besonders bevorzugt ist die Verwendung von Alkalihydrogensulfaten.

Das saure Additiv kann in einem beliebigen Stadium der Pastenherstellung zugegeben werden. Um eine gute Verteilung in der Paste zu gewährleisten, ist es sinnvoll, das Additiv mit einem der Pastenbestandteile zu verdünnen und diese Verdünnung nach der Zugabe der Kieselsäure einzumischen. Bei der Verwendung von Schwefelsäure oder Alkalihydrogensulfaten hat es sich als günstig erwiesen, das Additiv in Form einer Paste einzusetzen. Eine solche Paste kann durch Vermischen einer Lösung des Additivs in wenig Wasser, einem Polydimethylsiloxan und pyrogener Kieselsäure hergestellt werden.

Die erforderliche Säuremenge hängt von der Konzentration an K⁺ im Polymergemisch ab. Konzentrationen von 1 bis 20 Säureäquivalenten pro K⁺ Äquivalent reichen zur Stabilisierung aus. Bevorzugt sind 1 bis 3 Äquivalente Säure pro Äquivalent K⁺.

Bei der Berechnung der eingesetzten Säuremenge muß sichergestellt sein, daß die Pastenrohstoffen keine starke Säure ins System einschleppen. Sollte dies der Fall sein, kann die tatsächlich erforderliche Menge durch Vorversuche anhand von Schnellalterungstests bei erhöhter Temperatur ermittelt werden.

Die folgenden Beispiele sollen die Erfindung näher erläutern.

### Beispiel 1:

Aus 89,2 Gew.-Teilen eines Trimethylsiloxy-endgestoppten Polydimethylsiloxans der Viskosität 0,1 Pas, 10,0 Gew.-Teilen pyrogener Kieselsäure mit einer BET Oberfläche von 150 m²/g und 0,8 Gew.-Teilen 25 % iger Schwefelsäure wurde in einem Planetenmischer eine Stabilisatorpaste A hergestellt.

Eine feuchtigkeitshärtende Siliconpaste B wurde unter Feuchtigkeitsausschluß durch Vermischen der folgenden Bestandteile hergestellt: 57,0 Gew.-Teile eines Dihydroxypolydimethysiloxans der Viskosität 80 Pas, 30,0 Gew.-Teile eines Trimethylsiloxy-endgestoppten Polydimethylsiloxans der Viskosität 0,1 Pas, 3,5 Gew.-Teile Ethyltriacetoxysilan, 9,5 Gew.-Teile pyrogener Kieselsäure mit einer BET Oberfläche von 150 m²/g und 0,01 Gew.-Teile Dibutylzinndiacetat. Die zur Herstellung der Paste verwendeten Polysiloxane enthielten das Reaktionsprodukt aus 13 ppm Kaliumhydroxid und der äquimolaren Menge Phosphorsäure.

100 Gew.-Teilen der Siliconpaste B wurden 0,5 Gew.-Teile der Stabilisatorpaste A zugesetzt. Die resultierende Paste wurde in eine Aluminiumtube abgefüllt. Die Tube wurde einer Schnellalterung bei 100°C unterzogen. Nach 10 tägiger Lagerung der Tube bei 100°C wurde eine Probe entnommen und in einer 2 mm dicken Schicht ausgestrichen. Nach 24 Stunden war das Material unter dem Einfluß von Luftfeuchtigkeit zu einem trockenen Gummi vernetzt.

### Beispiel 2 (Vergleich):

Die Siliconpaste B wurde ohne Zusatz der Stabilisatorpaste A der Schnellalterung bei 100 °C unterzogen. 4 Tage nach dem Ausspritzen war die Masse noch klebrig und weich.

### Beispiel 3:

Aus 89,0 Gew.-Teilen eines Trimethylsiloxy-endgestoppten Polydimethylsiloxans der Viskosität 0,1 Pas, 10,0 Gew.-Teilen pyrogener Kieselsäure mit einer BET Oberfläche von 150 m²/g und 1,0 Gew.-Teilen p-Nonylbenzolsulfonsäure wurde in einem Planetenmischer eine Stabilisatorpaste C hergestellt.

100 Gew.-Teilen der Siliconpaste B aus Beispiel 1 wurden 0,65 Gew.-Teile der Stabilisatorpaste C zugesetzt. Die resultierende Paste wurde behandelt, wie in Beispiel 1 beschrieben. Nach der Schnellalterung härtete die Paste innerhalb 24 Stunden zu einem trockenen Gummi aus.

### Beispiel 4:

Aus 88,15 Gew.-Teilen eines Trimethylsiloxy-endgestoppten Polydimethylsiloxans der Viskosität 0,1 Pas, 10,0 Gew.-Teilen pyrogener Kieselsäure mit einer BET Oberfläche von 150 m²/g und 1,85 Gew.-Teilen einer 30 % igen Lösung von Kaliumhydrogensulfat in Wasser wurde in einem Planetenmischer eine Stabilisatorpaste D hergestellt.

100 Gew.-Teilen der Siliconpaste B aus Beispiel 1 wurden 0,5 Gew.-Teile der Stabilisatorpaste D zugesetzt. Die Paste wurde, wie in Beispiel 1 beschrieben, der Schnellalterung bei 100 °C ausgesetzt. 24 Stunden nach dem Ausspritzen war das Material unter dem Einfluß von Luftfeuchtigkeit zu einem trockenen Gummi vernetzt.

### Beispiel 5:

100 Gew.-Teile der Siliconpaste B aus Beispiel 1 wurden mit 0,4 Gew.-Teilen einer Mischung E aus 96,5 Gew.-Teilen eines mit Trimethylsiloxy Gruppen endgestoppten Polydimethylsiloxans der Viskosität 0,1 Pas und 3,5 Gew.-Teilen Methyltrichlorsilan versetzt. Die Paste wurde, wie in Beispiel 1 beschrieben, der 10 tägigen Schnellalterung bei 100 °C unterzogen. 24 Stunden nach dem Ausspritzen war das Material unter dem Einfluß von Luftfeuchtigkeit zu einem trockenen Gummi vernetzt.

## Patentansprüche

1. Verfahren zur Verbesserung der Lagerfähigkeit von unter Abspaltung von Essigsäure härtenden Siliconmassen, die unter Verwendung von anionisch polymerisierten und Alkalihosphate enthaltenden Polysiloxanen hergestellt werden, dadurch gekennzeichnet, daß man saure Additive mit dem funktionellen Rest -SO₃H oder Chlorwasserstoff oder Verbindungen, die in Gegenwart von Essigsäure Chlorwasserstoff freisetzen in Konzentrationen zusetzt, die ausreichen, die Alkaliphosphate in Alkalisalze der sauren Additive zu überführen.

2. Verfahren nach Anspruch 1, dadurch gekennzeichnet, daß man Chlorwasserstoff, Chlorsilane, Schwefelsäure, Metallhydrogensulfate, Alkyl- oder Arylsulfonsäuren, Silylsulfate oder Silylsulfate verwendet.

3. Verfahren nach Anspruch 1, dadurch gekennzeichnet, daß man 1 bis 20 Äquivalente des sauren Additivs pro Äquivalent des im Polydimethylsiloxanen enthaltenen Alkaliions zusetzt.

4. Verfahren nach Anspruch 1, dadurch gekennzeichnet, daß man als Additive Schwefelsäure oder Hydrogensulfate der Alkalimetalle verwendet.

## Claims

1. Process for improving the storability of silicone materials which harden by eliminating acetic acid, these being prepared by using anionically polymerised and alkali metal phosphate-containing polysiloxanes, characterised in that acid additives containing the functional group -SO₃H or hydrogen chloride or compounds which release hydrogen chloride in the presence of acetic acid, are added in concentrations sufficient to convert the alkali metal phosphates into alkali metal salts of the acid additives.

2. Process according to Claim 1, characterised in that hydrogen chloride, chlorosilanes, sulphuric acid, metal hydrogen sulphates, alkyl or aryl sulphonic acids, silyl sulphates or silyl sulphates are used.

3. Process according to Claim 1, characterised in that 1 to 20 equivalents of the acid additive are added per equivalent of the alkali metal ion contained in the polydimethylsiloxane.

4. Process according to Claim 1, characterised in that sulphuric acid or hydrogen sulphates of the alkali metals are used as additives.

## Revendications

1. Procédé pour améliorer l'aptitude à l'entreposage de matières de silicone qui durcissent en libérant de l'acide acétique et que l'on prépare en utilisant des polysiloxanes polymérisés par voie anionique et contenant des phosphates de métaux alcalins, caractérisé en ce qu'on ajoute des additifs acides possédant le radical fonctionnel -SO₃H ou de l'acide chlorhydrique ou encore des composés qui libèrent de l'acide chlorhydrique en présence d'acide acétique, dans des concentrations qui suffisent pour transformer les phosphates de métaux alcalins en sels alcalins des additifs acides.

2. Procédé selon la revendication 1, caractérisé en ce qu'on utilise l'acide chlorhydrique, des chlorosilanes, l'acide sulfurique, des hydrogénosulfates métalliques, des acides alkyl- ou arylsulfoniques, des silylsulfates ou des silylsulfonates.

3. Procédé selon la revendication 1, caractérisé en ce qu'on ajoute de 1 à 20 équivalents de l'additif acide par équivalent de l'ion alcalin contenu dans des polydiméthylsiloxanes.

4. Procédé selon la revendication 1, caractérisé en ce qu'on utilise comme additifs, l'acide sulfurique ou des hydrogénosulfates des métaux alcalins.
